# EUROPEAN PATENT APPLICATION

(11) **EP 4 184 172 A1**
(43) Date of publication of application: **24.05.2023**
(21) Application number: 21938929.3
(22) Date of filing: 02.11.2021
(51) Int. Cl.: G01N 35/00, G01N 35/02, G01N 35/04, G01N 21/17, G01N 21/01

(54) **BIOCHEMICAL ANALYZER**

(30) Priority: 30.04.2021 CN 202110482774
(71) Applicant: Lansion Biotechnology Co., Ltd, Nanjing, Jiangsu 211100 (CN)
(72) Inventor: XU, Xingshang, Nanjing, Jiangsu 211100 (CN); CHEN, Jeffery, Nanjing, Jiangsu 211100 (CN); LU, Jiayong, Nanjing, Jiangsu 211100 (CN)
(74) Representative: ZHAOffice SPRL
(86) International application number: PCT/CN2021/128154
(87) International publication number: WO 2022/227467

(57) **Abstract**

A biochemical analyzer is disclosed. The biochemical analyzer includes a detection disc sample feeding device, a detection disc device, an optical path detection device, and a temperature control device. The detection disc device includes a rotatable detection disc. The detection disc has a plurality of partitions, and each partition is correspondingly equipped with one chip to be detected. The detection disc is further provided with an optical limiting slot, and the optical limiting slot cooperates with a first limiting optocoupler located on a side face of the detection disc to monitor the number of rotations of the detection disc. Each partition of the detection disc may be equipped with one chip to be detected, and multiple chips can be detected in one operation by using the rotatable detection disc. In addition, the optical limiting slot monitors the number of rotations of the detection disc, so that a chip centrifugation process during detection is accurately controlled, thereby resolving a technical problem of improving detection efficiency through simultaneous detection of multiple chips.

## Description

### TECHNICAL FIELD

The present invention relates to the technical field of biochemical analysis and detection, and in particular, relates to a biochemical analyzer for detecting and analyzing a chip.

### BACKGROUND

A biochemical analyzer, also often referred to as a biochemical instrument, is an instrument that uses a principle of photoelectric colorimetry to measure a specific chemical component in body fluids. Due to their fast measurement speed, high accuracy, and small consumption of reagents, biochemical analyzers have been widely used in hospitals, epidemic prevention stations, and family planning service stations at all levels. The combined use can greatly improve efficiency and benefits of routine biochemical tests.

Since Technicon Corporation of the United States successfully manufactured the world's first fully automated biochemical analyzer in 1957, various different models and functions of fully automated biochemical analyzers have been merging. This is a very important step for the automation of clinical biochemical tests in hospitals. Since Skeggs first introduced the principle of a clinical biochemical analyzer in the 1950s, with the development of science and technology, especially medical science, various biochemical automated analyzers and diagnostic reagents have developed greatly. According to different structural principles, instruments can be divided into four types: continuous flow type (pipeline type), discrete type, separate type, and dry sheet type.

Chinese patent document No. CN111721952A discloses a biochemical analyzer and a biochemical analysis method for biochemical analysis of a chip cassette. The biochemical analyzer includes: an incubation tank module, including different operation stations arranged along a straight line, and configured to drive a chip cassette in which a disposable test reagent is sealed to move along the operation stations to perform biochemical detection; and an operation mechanism, arranged beside the operation stations to perform corresponding operations. The incubation tank module includes an incubation tank internally provided with a linear channel. On the top of the incubation tank, a piercing position and a sample addition position that communicate with the linear channel are arranged at intervals along the direction of the linear channel. A detection position communicating with the linear channel is provided on a side face of the incubation tank, and a side wall of the chip cassette corresponding to the detection position is transparent to light. A drive mechanism capable of driving the chip cassette is provided at one side of the linear channel.

The biochemical analyzer of the foregoing technical solution is not ideal in actual practice, and the chip detection efficiency thereof is too low as it is impossible to detect multiple chips in one operation.

### SUMMARY

The present invention provides a biochemical analyzer, which can resolve a technical problem of improving detection efficiency through simultaneous detection of multiple chips.

To resolve the foregoing technical problem, the following technical solution is adopted in the present invention: The biochemical analyzer includes a detection disc sample feeding device, a detection disc device, an optical path detection device, and a temperature control device. The detection disc device includes a rotatable detection disc, the detection disc has a plurality of partitions, and each partition is correspondingly equipped with one chip to be detected. The detection disc is further provided with an optical limiting slot, and the optical limiting slot cooperates with a first limiting optocoupler located on a side face of the detection disc to monitor the number of rotations of the detection disc.

Each partition of the detection disc may be equipped with one chip to be detected, and multiple chips can be detected in one operation by using the rotatable detection disc. In addition, the optical limiting slot monitors the number of rotations of the detection disc, so that a chip centrifugation process during detection is accurately controlled. The detection disc sample feeding device is configured for sample feeding. When detection starts, the detection disc sample feeding device is activated, and the detection disc device extends out of the instrument, and after a biochemical detection chip added with a sample is placed in the detection disc, the detection disc sample feeding device is activated and enters the detection instrument. The temperature control device controls a reaction temperature within a detection cavity of the instrument. The optical path detection device detects a detection chamber of a chip, and displays a detection result on a display screen of the instrument.

Preferably, the detection disc is mounted on a detection disc front and rear movement bracket, and a detection disc rotation motor is connected below the detection disc front and rear movement bracket; and the detection disc front and rear movement bracket is connected to a detection disc front and rear movement belt connector, the detection disc front and rear movement belt connector drives the detection disc front and rear movement bracket to move, and the detection disc front and rear movement bracket cooperates with a detection disc front and rear movement slider by means of a detection disc front and rear movement slide rail to realize front and rear sliding.

According to the biochemical analyzer of the foregoing structure, the detection disc front and rear movement bracket drives the detection disc and the detection disc rotation motor as a whole to perform front and rear movements by means of the detection disc front and rear movement slide rail. The structure is optimized and the layout is appropriate. In addition, it should be noted herein that the detection disc front and rear movement belt connector may be driven by a manual operation or a motor, or other means.

Preferably, the detection disc sample feeding device includes a detection disc front and rear movement motor, and the detection disc front and rear movement motor drives a detection disc front and rear movement belt that is wound on a detection disc front and rear movement driving pulley and a detection disc front and rear movement driven pulley to move; the detection disc front and rear movement belt connector is provided on the detection disc front and rear movement belt; and a detection disc front and rear movement limiting stopper is provided on a side face of the detection disc front and rear movement bracket, and cooperates with a detection disc front and rear movement limiting optocoupler to limit front and rear movements of the detection disc.

Preferably, a fan is further provided on the side face of the detection disc front and rear movement bracket, and the fan cooperates with the temperature control device to control a reaction temperature of a detection cavity.

Preferably, a second limiting optocoupler is further provided on the side face of the detection disc, the second limiting optocoupler cooperates with a code wheel in the detection disc device, and when the second limiting optocoupler detects a spacing region of the code wheel, the optical path detection device performs optical detection on a detection chamber of a chip.

Preferably, the optical path detection device includes an optical path detection transmitting assembly and an optical path detection receiving assembly, where the optical path detection transmitting assembly is provided in an optical path detection transmitting base, and the optical path detection receiving assembly is provided in an optical path detection receiving base; and the optical path detection transmitting assembly includes an transmitting light source, an transmitting lens, and a transmitting circuit board, and the optical path detection receiving assembly includes a filter, a receiving lens, a circuit board, and a photocell.

Preferably, the circuit board is connected to a temperature sensor, and the temperature sensor ensures accuracy of temperature control in the detection cavity.

Preferably, the optical path detection receiving base is located above the detection disc, and the optical path detection transmitting base is located below the detection disc.

Such a structural layout of the optical path detection receiving base and the optical path detection transmitting base facilitates optical path detection of a chip located on the detection disc.

Preferably, the biochemical analyzer is further provided with a detection cover, the temperature sensor is provided on the detection cover, and the detection cover is further provided with a cover plate; and the optical path detection receiving base is provided on the detection cover, and the photocell located on the optical path detection receiving base is connected to the circuit board.

The detection cover and the cover plate are configured to protect and support other components located in the biochemical analyzer to ensure normal detection.

Preferably, the biochemical analyzer is further provided with a scanner, and the scanner is located above the detection disc, scans a chip to be detected located on the detection disc, and uploads obtained information; a detector sample feeding baffle is further provided on a side face of the detection cover.

The scanner scans a biochemical detection chip, and chip information such as a detection item, a production batch number, and others are uploaded and stored.

Preferably, the detection disc device further includes a detection disc adapter block; the detection disc rotation motor is connected to the detection disc front and rear movement bracket by means of a motor base, and the code wheel is fixedly connected to the detection disc adapter block and rotates with a motor shaft of the detection disc rotation motor; and the detection disc adapter block is connected to the detection disc.

Preferably, a magnet is provided in the center of the detection disc adapter block, and a detection disc magnetic block is magnetically assembled with the magnet. The cooperation of the magnet and the detection disc magnetic block strengthens the connection between the detection disc and the detection disc adapter block, so that the detection disc is more stably connected to the detection disc adapter block.

Preferably, each partition in the detection disc is provided with a first detection disc chip limiting structure at a position close to the center of the disc, and provided with a second detection disc chip limiting structure at a position away from the center of the disc, and the chip to be detected is fixed in each partition by the first detection disc chip limiting structure and the second detection disc chip limiting structure.

### BRIEF DESCRIPTION OF THE DRAWINGS

The following further provides detailed description with reference to the accompanying drawings and implementations of the present invention:
FIG. 1 is a schematic diagram of an overall structure of a biochemical analyzer;
FIG. 2 is a schematic structural diagram of the biochemical analyzer in FIG. 1 after removal of a detection cover;
FIG. 3 is a schematic diagram of a cross-sectional structure of the biochemical analyzer in FIG. 1 after removal of a detection cover and a cover plate;
FIG. 4 is a first schematic diagram of a cross-sectional structure of the biochemical analyzer in FIG. 1 after removal of a cover plate;
FIG. 5 is a second schematic diagram of a cross-sectional structure of the biochemical analyzer in FIG. 1 after removal of a cover plate;
FIG. 6 is a first schematic structural diagram of an optical path detection device;
FIG. 7 is a schematic diagram of an exploded structure of an optical path detection transmitting assembly and an optical path detection receiving assembly of the optical path detection device in FIG. 6;
FIG. 8 is a second schematic structural diagram of an optical path detection device;
FIG. 9 is a schematic structural diagram of a detection disc;
FIG. 10 is a schematic structural diagram of the assembly of a detection disc front and rear movement bracket and a detection disc front and rear movement limiting stopper;
FIG. 11 is a schematic diagram of a cross-sectional structure of a detection disc device;
FIG. 12 is a schematic structural diagram of a detection disc device; and
FIG. 13 is a schematic diagram of an exploded structure of a detection disc device.

In the figures: 1-detection disc sample feeding device, 101-detection disc front and rear movement bracket, 102-detection disc front and rear movement belt connector, 103-detection disc front and rear movement slider, 104-detection disc front and rear movement slide rail, 105-detection disc front and rear movement motor, 106-detection disc front and rear movement driving pulley, 107-detection disc front and rear movement driven pulley, 108-detection disc front and rear movement belt, 109-detection disc front and rear movement limiting stopper, 1010-detection disc front and rear movement limiting optocoupler, 1011-detector sample feeding baffle; 2-detection disc device, 201-detection disc, 202-optical limiting slot, 203-first limiting optocoupler, 204-detection disc rotation motor, 205-second limiting optocoupler, 206-code wheel, 207-detection disc adapter block, 208-motor base, 209-magnet, 2010-detection disc magnetic block, 2011-first detection disc chip limiting structure, 2012-second detection disc chip limiting structure; 3-optical path detection device, 301-optical path detection transmitting assembly, 302-optical path detection receiving assembly, 303-optical path detection transmitting base, 304-optical path detection receiving base, 305-transmitting light source, 306-transmitting lens, 307-transmitting circuit board, 308-filter, 309-receiving lens, 3010-photocell; 4-temperature control device, 401-fan, 402-temperature sensor; 5-detection cover; 6-cover plate; 7-circuit board; 8-scanner; 9-support board; 10-chip, 1001-chip scanning region.

### DETAILED DESCRIPTION OF THE INVENTION

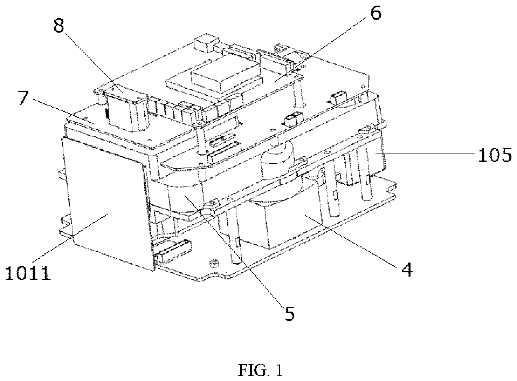

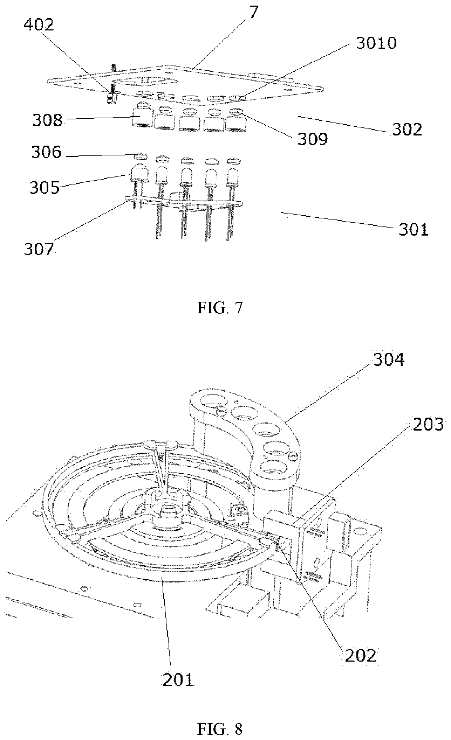

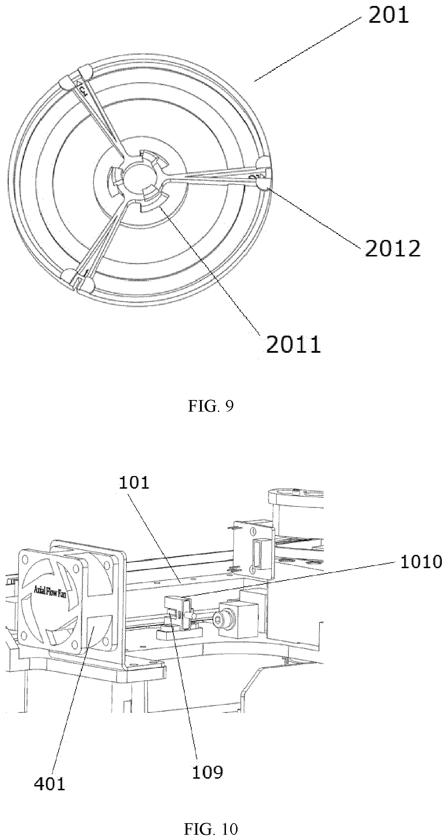

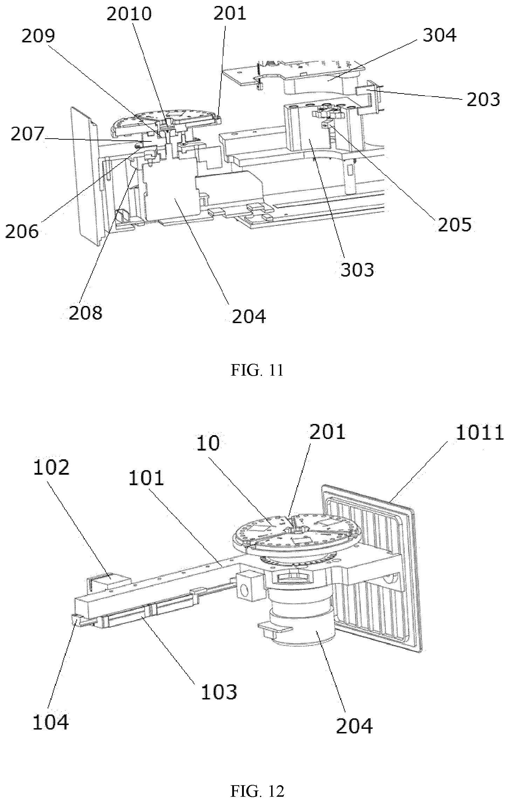

As shown in FIG. 1 to FIG. 13, in this embodiment, a biochemical analyzer includes a detection disc sample feeding device 1, a detection disc device 2, an optical path detection device 3, and a temperature control device 4. The detection disc device 2 includes a rotatable detection disc 201. The detection disc 201 has three partitions (as shown in FIG. 9, although other numbers of partitions may also be provided depending on the size of a chip 10). Each partition may be correspondingly equipped with one chip to be detected 10. The detection disc 201 is further provided with an optical limiting slot 202. The optical limiting slot 202 cooperates with a first limiting optocoupler 203 located on a side face of the detection disc 201 to monitor the number of rotations of the detection disc 201.

The detection disc 201 is mounted on a detection disc front and rear movement bracket 101, and a detection disc rotation motor 204 is connected below the detection disc front and rear movement bracket 101. The detection disc front and rear movement bracket 101 is connected to a detection disc front and rear movement belt connector 102. The detection disc front and rear movement belt connector 102 drives the detection disc front and rear movement bracket 101 to move. The detection disc front and rear movement bracket 101 cooperates with a detection disc front and rear movement slider 103 by means of a detection disc front and rear movement slide rail 104 to realize front and rear sliding. In this embodiment, there are two detection disc front and rear movement sliders 103, connected to a support board 9. The detection disc front and rear movement slide rail 104 is connected to the detection disc front and rear movement bracket 101.

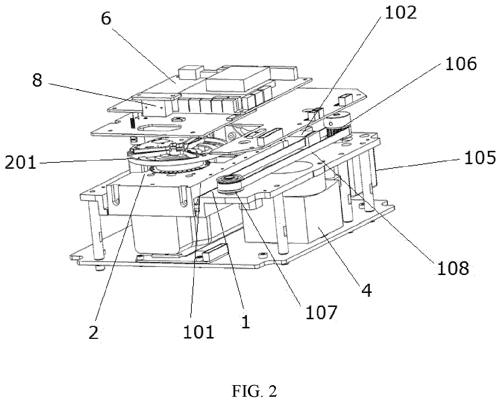

As shown in FIG. 2, the detection disc sample feeding device 1 includes a detection disc front and rear movement motor 105, and the detection disc front and rear movement motor 105 drives a detection disc front and rear movement belt 108 that is wound on a detection disc front and rear movement driving pulley 106 and a detection disc front and rear movement driven pulley 107 to move. The detection disc front and rear movement belt connector 102 is provided on the detection disc front and rear movement belt 108. A detection disc front and rear movement limiting stopper 109 is provided on a side face of the detection disc front and rear movement bracket 101, and cooperates with a detection disc front and rear movement limiting optocoupler 1010 to limit front and rear movements of the detection disc 201.

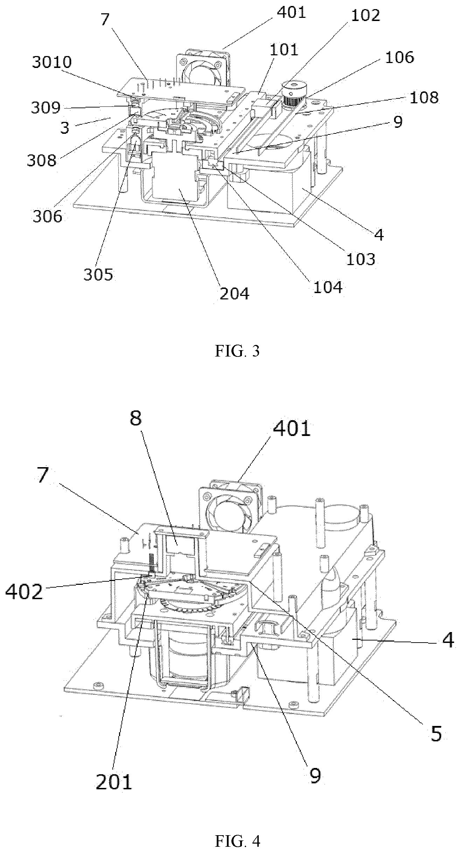

A fan 401 is further provided on the side face of the detection disc front and rear movement bracket. As shown in FIG. 3 to FIG. 5, and FIG. 10, the fan 401 cooperates with the temperature control device 4 to control a reaction temperature of a detection cavity.

A second limiting optocoupler 205 is further provided on the side face of the detection disc 201. The second limiting optocoupler 205 cooperates with a code wheel 206 in the detection disc device 2. When the second limiting optocoupler 205 detects a spacing region of the code wheel 206, the optical path detection device 3 performs optical detection on a detection chamber of a chip.

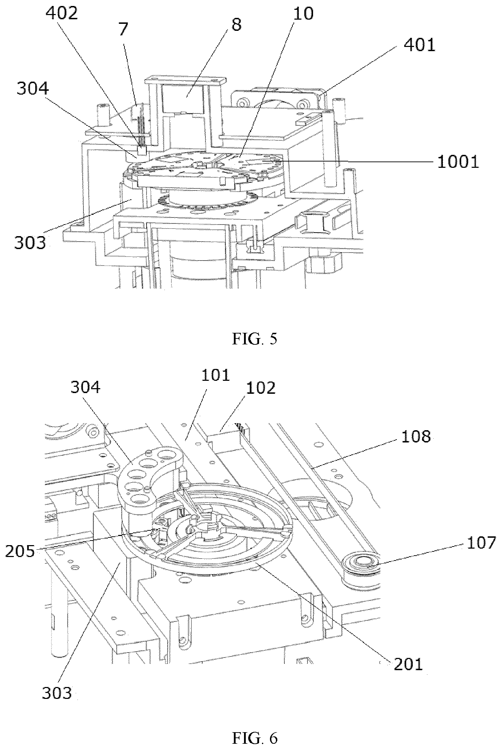

As shown in FIG. 6 to FIG. 8, the optical path detection device 3 includes an optical path detection transmitting assembly 301 and an optical path detection receiving assembly 302. The optical path detection transmitting assembly 301 is provided in an optical path detection transmitting base 303, and the optical path detection receiving assembly 302 is provided in an optical path detection receiving base 304. The optical path detection transmitting assembly 301 includes a transmitting light source 305, a transmitting lens 306, and a transmitting circuit board 307. The optical path detection receiving assembly 302 includes a filter 308, a receiving lens 309, a circuit board 7, and a photocell 3010. The circuit board 7 is further connected to a temperature sensor 402. It should be noted that, in this embodiment, there are five sets of optical path detection assemblies (optical path detection transmitting assemblies and optical path detection receiving assemblies), which can detect optical paths of five different wavelengths. The circuit board 7 is not only used as a circuit board in the optical path detection receiving assembly (serving as a circuit board in the optical path detection receiving assembly is only part of its function to be realized), but also is a main circuit board of the biochemical analyzer of this embodiment, with other circuit structures attached thereto, to realize more other functions. Such a configuration is more concise and compact.

The optical path detection receiving base 304 is located above the detection disc 201. The optical path detection transmitting base 303 is located below the detection disc 201.

The biochemical analyzer of this embodiment is further provided with a detection cover 5. As shown in FIG. 1, the temperature sensor 402 is provided on the detection cover 5, and the detection cover 5 is further provided with a cover plate 6. The optical path detection receiving base 304 is provided on the detection cover 5. The photocell 3010 located on the optical path detection receiving base 304 is connected to the circuit board 7. The temperature control device 4 is mounted below the detection cover 5, specifically below the support board 9, and the detection disc front and rear movement motor 105 is also located below the support board 9. The detection disc front and rear movement driving pulley 106 and the detection disc front and rear movement driven pulley 107 are both located above the support board 9. The structure layout is appropriate, saving the space of the analyzer.

The biochemical analyzer is further provided with a scanner 8 (outside which a scanner housing may further be provided that is disposed on the detection cover 5 and configured to support and fix the scanner 8). As shown in FIG. 1, FIG. 4, and FIG. 5, the scanner 8 is located above the detection disc 201, the circuit board 7 is provided with a mounting through hole structure, and the scanner 8 is mounted in the through hole, so that the scanner 8 can scan a chip to be detected 10 on the detection disc 201 through the circuit board 7 and upload obtained information, and chip information such as a detection item, a production batch number, and others are uploaded and stored. A detector sample feeding baffle 1011 is further provided on a side face of the detection cover 5, as shown in FIG. 1.

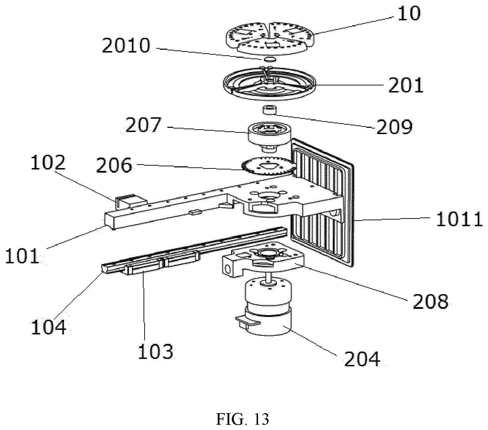

As shown in FIG. 9 to FIG. 13, the detection disc device 2 further includes a detection disc adapter block 207. The detection disc rotation motor 204 is connected to the detection disc front and rear movement bracket 101 by means of a motor base 208. The code wheel 206 is fixedly connected to the detection disc adapter block 207, and rotates with a motor shaft of the detection disc rotation motor 204. The detection disc adapter block 207 is connected to the detection disc 201. A magnet 209 is provided in the center of the detection disc adapter block 207, and a detection disc magnetic block 2010 is magnetically assembled with the magnet 209, so that the detection disc 201 is more stably connected to the detection disc adapter block 207. Assembled sequentially in an order of disassembly shown in FIG. 13, the detection disc magnetic block 2010 is located in the center of the detection disc 201.

Each partition in the detection disc 201 is provided with a first detection disc chip limiting structure 2011 at a position close to the center of the disc, and provided with a second detection disc chip limiting structure 2012 at a position away from the center of the disc. The chip to be detected 10 is fixed in each partition by the first detection disc chip limiting structure 2011 and the second detection disc chip limiting structure 2012. As shown in FIG. 9 and FIG. 13, especially FIG. 13, the chip 10 in this embodiment is sector-shaped, corresponding to the sector-shaped partition of the detection disc 201. The detection disc 201 of this embodiment is divided into three sector-shaped partitions.

When a detection starts, the detection disc sample feeding device 1 is activated, and the detection disc device 2 extends out of the instrument, and after a biochemical detection chip 10 added with a sample is placed in the detection disc 201, the detection disc sample feeding device 1 is activated again and enters the biochemical analyzer. The temperature control device 4 controls a reaction temperature within a detection cavity of the instrument, and the temperature sensor 402 ensures accuracy of temperature control in the detection cavity. The scanner 8 scans a chip scanning region 1001 of the biochemical detection chip 10 on the detection disc 201, and chip information such as a detection item, a production batch number, and others are uploaded to the instrument. The detection disc device 2 is set according to a control program, and the detection disc rotation motor 204 drives the detection disc 201 to perform operations such as rotational centrifugation and uniformly mixing, to complete a reaction process. Finally, the optical path detection device 3 is activated to detect the detection chamber of the chip, and a detection result is displayed on a display screen of the biochemical analyzer.

The basic principles, main features, and advantages of the present invention are shown and described above. Those skilled in the art should understand that the present invention is not limited by the foregoing embodiments. The foregoing embodiments and this description are only used to illustrate the principles of the present invention. Without departing from the spirit and scope of the present invention, various changes and improvements are possible to the present invention, and these changes and improvements all fall within the scope of the present invention. The scope of the present invention is defined by the appended claims and their equivalents.

## Claims

1. A biochemical analyzer, comprising a detection disc sample feeding device, a detection disc device, an optical path detection device, and a temperature control device, wherein the detection disc device comprises a rotatable detection disc, the detection disc has a plurality of partitions, and each partition is correspondingly equipped with one chip to be detected; and the detection disc is further provided with an optical limiting slot, and the optical limiting slot cooperates with a first limiting optocoupler located on a side face of the detection disc to monitor the number of rotations of the detection disc.

2. The biochemical analyzer according to claim 1, wherein the detection disc is mounted on a detection disc front and rear movement bracket, and a detection disc rotation motor is connected below the detection disc front and rear movement bracket; and the detection disc front and rear movement bracket is connected to a detection disc front and rear movement belt connector, the detection disc front and rear movement belt connector drives the detection disc front and rear movement bracket to move, and the detection disc front and rear movement bracket cooperates with a detection disc front and rear movement slider by means of a detection disc front and rear movement slide rail to realize front and rear sliding.

3. The biochemical analyzer according to claim 2, wherein the detection disc sample feeding device comprises a detection disc front and rear movement motor, and the detection disc front and rear movement motor drives a detection disc front and rear movement belt that is wound on a detection disc front and rear movement driving pulley and a detection disc front and rear movement driven pulley to move; the detection disc front and rear movement belt connector is provided on the detection disc front and rear movement belt; and a detection disc front and rear movement limiting stopper is provided on a side face of the detection disc front and rear movement bracket, and cooperates with a detection disc front and rear movement limiting optocoupler to limit front and rear movements of the detection disc.

4. The biochemical analyzer according to claim 3, wherein a fan is further provided on the side face of the detection disc front and rear movement bracket, and the fan cooperates with the temperature control device to control a reaction temperature of a detection cavity.

5. The biochemical analyzer according to claim 4, wherein a second limiting optocoupler is further provided on the side face of the detection disc, the second limiting optocoupler cooperates with a code wheel in the detection disc device, and when the second limiting optocoupler detects a spacing region of the code wheel, the optical path detection device performs optical detection on a detection chamber of a chip.

6. The biochemical analyzer according to claim 5, wherein the optical path detection device comprises an optical path detection transmitting assembly and an optical path detection receiving assembly, wherein the optical path detection transmitting assembly is provided in an optical path detection transmitting base, and the optical path detection receiving assembly is provided in an optical path detection receiving base; and the optical path detection transmitting assembly comprises an transmitting light source, an transmitting lens, and a transmitting circuit board, and the optical path detection receiving assembly comprises a filter, a receiving lens, a circuit board, and a photocell.

7. The biochemical analyzer according to claim 6, wherein the circuit board is connected to a temperature sensor.

8. The biochemical analyzer according to claim 5 or 6, wherein the optical path detection receiving base is located above the detection disc, and the optical path detection transmitting base is located below the detection disc.

9. The biochemical analyzer according to claim 7, wherein the biochemical analyzer is further provided with a detection cover, the temperature sensor is provided on the detection cover, and the detection cover is further provided with a cover plate; and the optical path detection receiving base is provided on the detection cover, and the photocell located on the optical path detection receiving base is connected to the circuit board.

10. The biochemical analyzer according to claim 9, wherein the biochemical analyzer is further provided with a scanner, and the scanner is located above the detection disc, scans a chip to be detected located on the detection disc, and uploads obtained information.

11. The biochemical analyzer according to claim 5, wherein the detection disc device further comprises a detection disc adapter block; the detection disc rotation motor is connected to the detection disc front and rear movement bracket by means of a motor base, and the code wheel is fixedly connected to the detection disc adapter block and rotates with a motor shaft of the detection disc rotation motor; and the detection disc adapter block is connected to the detection disc.

12. The biochemical analyzer according to claim 11, wherein a magnet is provided in the center of the detection disc adapter block, and a detection disc magnetic block is magnetically assembled with the magnet.

13. The biochemical analyzer according to claim 1, wherein each partition in the detection disc is provided with a first detection disc chip limiting structure at a position close to the center of the disc, and provided with a second detection disc chip limiting structure at a position away from the center of the disc, and the chip to be detected is fixed in each partition by the first detection disc chip limiting structure and the second detection disc chip limiting structure.
